# EUROPÄISCHE PATENTSCHRIFT

(11) **EP 0 391 090 B1**
(45) Veröffentlichungstag und Bekanntmachung des Hinweises auf die Patenterteilung: **20.01.1993**
(21) Anmeldenummer: 90104550.0
(22) Anmeldetag: 09.03.1990
(51) Int. Cl.: B62D 49/06, B60K 25/00

(54) **Antriebsverbindung an einem Trägerfahrzeug**
Drive connection for a vehicle with mounted implements
Liaison d'entraînement pour véhicule porteur d'outils

(30) Priorität: 04.04.1989 DE 3910828
(43) Veröffentlichungstag der Anmeldung: 10.10.1990
(73) Patentinhaber: ING. ALFRED SCHMIDT GMBH, D-79830 St Blasien (DE)
(72) Erfinder: Schmidt, Alfred, Dipl.-Ing. (FH), D-7821 Bernau (DE)
(74) Vertreter: Grättinger, Günter

(56) Entgegenhaltungen:
- EP-A- 0 149 129
- WO-A-82/01354

## Beschreibung

Die Erfindung betrifft eine Antriebsverbindung an einem Trägerfahrzeug für wechselbare hydraulisch angetriebene Anbaugeräte, mit einer oder mehreren fahrzeugseitig vorgesehenen Hydraulikpumpen, deren hydraulische Steuerung mittels eines elektronischen Steuergeräts einstellbar ist, welches entsprechend den Grunddaten für den hydraulischen Antrieb eines oder mehrerer Anbaugeräte programmierbar ist.

Es ist üblich, an Trägerfahrzeugen Vorrichtungen vorzusehen, die es gestatten, in Verbindung mit dem Trägerfahrzeug verschiedene Anbaugeräte zu betreiben. Vielfach besitzen diese Anbaugeräte Hydraulikmotoren, die von fahrzeugseitig vorgesehenen Hydraulikpumpen angetrieben werden; im Falle von Straßendienstfahrzeugen können frontseitig am Trägerfahrzeug wahlweise z.B. ein Randstreifenmähgerät, eine Vorbaukehrmaschine, eine Schneeschleuder, eine Schneefräse etc. angeschlossen werden. Je nach der Art des gerade im Einsatz befindlichen Anbaugerätes muß die fahrzeugseitige Hydraulikanlage unterschiedliche Randbedingungen erfüllen, d.h. beispielsweise der Volumenstrom, der zulässige Höchst- und der erforderliche Mindestdruck sowie weitere Größen müssen auf das jeweilige Anbaugerät eingestellt werden. Diese Abstimmung zwischen der fahrzeugseitigen Hydraulikanlage und dem jeweiligen hydraulisch angetriebenen Anbaugerät erfolgt mittels eines elektronischen Steuergeräts, welches entsprechend programmierbar ist und auf die hydraulische Steuerung einwirkt. Bei einem Wechsel des Anbaugerätes programmiert der Fahrer des Trägerfahrzeuges das elektronische Steuergerät entsprechend um.

Bei dem bekannten Vorgehen zur Anpassung der Grundeinstellung der Hydraulikanlage an das jeweilige Anbaugerät ist es nachteilig, daß die Gefahr der Fehlbedienung nicht auszuschließen ist. Eine unrichtige Grundeinstellung der Hydraulikanlage kann jedoch Fehlfunktionen am Anbaugerät, Schäden an der Hydraulikanlage und auch Unfälle nach sich ziehen.

Der vorliegenden Erfindung liegt die Aufgabe zugrunde, die Grundeinstellung der Hydraulikanlage in Anpassung an das jeweilige Anbaugerät einfach zu gestalten und sicher zu gewährleisten, insbesondere die Gefahr von Fehlbedienungen auszuschließen.

Erfindungsgemäß wird diese Aufgabe gemäß dem Kennzeichen von Ansprüch 1 gelöst. Nach der Lehre der Erfindung werden demnach gleichzeitig mit dem mechanischen Ankoppeln des Anbaugerätes am Fahrzeug eine bestimmte Anzahl und Konfiguration von Schaltern betätigt, welche insbesondere auf das elektronische Steuergerät wirken und dieses entsprechend programmieren. Auf diese Weise wird jede Fehlbedienung der Hydraulikanlage und somit die dadurch verursachte Gefahr von Fehlfunktionen, Schäden oder Unfällen ausgeschaltet. Darüber hinaus wird die zum Wechsel des Anbaugerätes erforderliche Zeit verkürzt, weil das bisher erforderliche Programmieren des Steuergerätes von Hand nicht mehr erforderlich ist.

Im Rahmen der Erfindung können sowohl analog wie auch digital wirkende Schaltelemente vorgesehen sein; im erstgenannten Fall gibt das Schaltelement ein Signal ab, dessen Größe beispielsweise proportional ist zu der Ausgangsgröße der hydraulischen Steuerung wie beispielsweise dem Volumenstrom, in dem zweitgenannten Fall bestimmt die Anzahl und die Konfiguration der betätigten Schalter einen Code, mit welchem von dem elektronischen Steuergerät eine fest einprogrammierte Grundeinstellung abgerufen wird. Die Verwendung von analogen Schaltelementen besitzt den Vorteil, daß ein relativ einfaches elektronisches Steuergerät ausreichend ist; gegebenenfalls, d.h. in dem Falle, daß die analogen Signale der Schaltelemente unmittelbar zur Betätigung der hydraulischen Steuerung geeignet sind, kann das elektronische Steuergerät auf eine einfache Schaltfunktion reduziert sein. Die Verwendung von digitalen Schaltelementen bringt dagegen den Vorteil, daß die Schaltelemente einfacher aufgebaut sein können, wodurch die Gefahr einer nachteiligen Funktionsbeeinflussung durch Verschmutzung vermindert wird. Darüber hinaus kann bei der Verwendung von digitalen Schaltelementen deren Anzahl geringer sein als im Falle von analogen Schaltelementen; so können beispielsweise mit drei digitalen Schaltelementen acht verschiedene Programmierungen des elektronischen Steuergeräts abgerufen werden, d.h. es können wahlweise acht verschiedene Anbaugeräte in Verbindung mit dem Trägerfahrzeug verwendet werden, ohne daß ein Anpassen der Grundeinstellung der Hydraulikanlage von Hand erforderlich wird. Dagegen wird im Fall von analogen Schaltelementen i.a. für jede einzustellende Größe der Hydraulikanlage ein eigenes Schaltelement vorgesehen sein, d.h. bei vier zu beeinflussenden Größen, wie beispielsweise Volumenstrom, Höchstdruck, Mindestdruck und Antriebsmodus (abhängig von Motordrehzahl oder Fahrgeschwindigkeit), sind i.a. vier analoge Schaltelemente erforderlich.

Die Schalter können auf jede bekannte Weise auf das elektronische Steuergerät und/oder die hydraulische Steuerung wirken, d.h. im Rahmen der Erfindung können elektrische, hydraulische, pneumatische und sonstige Schalter bzw. entsprechende Schaltungen Verwendung finden. In einer bevorzugten Ausführungsform werden durch Betätigen der Schalter elektrische Verbindungen hergestellt.

Bei einer bevorzugten Ausführungsform der erfindungsgemäßen Antriebsverbindung ist vorgesehen, daß mittels der Schaltelemente bzw. der durch deren Betätigung abgerufenen, im elektronischen Steuergerät gespeicherten Programmierung zumindest die folgenden Größen der Hydraulikanlage beeinflußbar sind: Anzahl und/oder Typ der zu aktivierenden Hydraulikpumpen, Volumenstrom bzw. Pumpenanstellwinkel der angewählten Hydraulikpumpen, Höchst- und/oder Mindestdruck des Hydrauliksystems, maximaler Volumenstrom bei maximalem Druck im Hydrauliksystem. Bevorzugt wird auch die für das jeweilige Anbaugerät optimale Pumpenkennlinie durch die Betätigung der Schaltelemente beim Ankoppeln des Anbaugeräts gewählt. Ferner kann vorgesehen sein, auch das Zusammenschalten mehrerer Hydraulik- bzw. Pumpenströme durch die Betätigung der Schaltelemente zu bewirken. Auf diese Weise werden diejenigen Größen der Hydraulikanlage beim Ankoppeln des jeweiligen Anbaugerätes automatisch eingestellt, die für die überwiegende Anzahl von Anbaugeräten ausreichend ist; einzelne weitere gegebenenfalls erforderliche Randbedingungen für den Betrieb eines bestimmten Anbaugerätes können darüber hinaus manuell eingestellt werden.

Bei einer weiteren bevorzugten Ausführungsform der erfindungsgemäßen Antriebsverbindung wird mittels der Schaltelemente auch der für das jeweilige Anbaugerät erforderliche Abtrieb gewählt. Vorzugsweise kann durch Betätigung der Schaltelemente zwischen einem motorabhängigen und einem nockenwellenabhängigen Nebenabtrieb gewählt werden. Ein weiterer für einzelne Anbaugeräte bevorzugter Abtrieb besitzt eine zur Fahrgeschwindigkeit proportionale Drehzahl.

Je nach Einsatzbedingungen werden mechanische Schalter wie Nocken- oder Rollenschalter oder aber berührungslose Schalter als Schaltelemente bevorzugt. Während die mechanischen Schalter im allgemeinen robust und preiswert sind, ist in bestimmten Anwendungsfällen eine Funktionsbeeinträchtigung durch Verschmutzung, Vereisung etc. nicht auszuschließen. Aus diesem Grunde werden im allgemeinen berührungslose Schalter zu bevorzugen sein. Dabei besteht eine bevorzugte Anordnung darin, daß die berührungslosen Schalter an einer fahrzeugseitigen Schalterplatte nach einer vorgegebenen Funktionsmatrix angeordnet sind, denen geräteseitig eine sich der Schalterplatte beim Ankoppeln annährende Metallplatte zugeordnet ist, welche am Ort jedes nicht zu betätigenden Schalters Durchbrechungen aufweist. Es werden somit nur diejenigen Schalter an der Schalterplatte betätigt, für die die Metallplatte keine Durchbrechungen besitzt; die entsprechende Konfiguration der betätigten Schalter entspricht einem Code, welcher aus dem elektronischen Steuergerät die für das angekoppelte Anbaugerät vorgesehene Programmierung der Hydraulikanlage abruft. Die dabei zu verwendenden berührungslosen Schalter können nach den unterschiedlichsten bekannten Prinzipien, d.h. unter Ausnutzung optischer, akustischer, elektromagnetischer und dergleichen Effekte, funktionieren.

Im folgenden werden Ausführungsbeispiele der Erfindung anhand der Zeichnung näher erläutert. Es zeigt
Fig. 1 in schematischer Darstellung den Aufbau eines Ausführungsbeispiels der erfindungsgemäßen Antriebsverbindung mit zugeordneter Hydraulikanlage des Trägerfahrzeuges;
Fig. 2 eine vorteilhafte konstruktive Ausführungsform der erfindungsgemäßen Antriebsverbindung,
Fig. 3 eine Anordnung mit analogen Schalelementen und
Fig. 4 eine Anordnung mit digitalen Schaltelementen

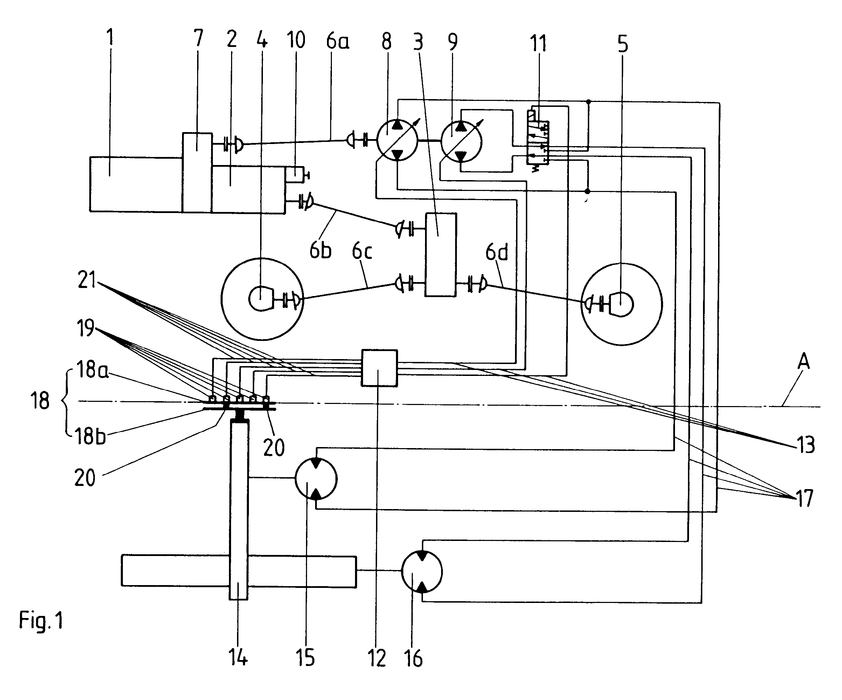

In Fig. 1 sind die dem Trägerfahrzeug zugeordneten Teile und Aggregate von den dem Anbaugerät zugeordneten durch die strichpunktierte Linie A getrennt.

Der Antrieb des Trägerfahrzeuges umfaßt einen Motor 1, welcher die zum Antrieb des Fahrzeuges wie auch der Hydraulikanlage benötigte Leistung zur Verfügung stellt. Der Antrieb des Fahrzeuges erfolgt dabei über ein Schaltgetriebe 2 und ein Verteilergetriebe 3 auf die Vorderachse 4 und die Hinterachse 5 des Trägerfahrzeuges. Die Übertragung des Drehmomentes erfolgt in gewohnter Weise mittels Kardanwellen 6b - 6d.

Die zum Betrieb der Hydraulikanlage erforderliche Leistung wird von dem Motor 1 über einen Nebenabtrieb 7 abgenommen. In dem vorliegenden Ausführungsbeispiel ist die Drehzahl des Nebenabtriebs 7 proportional zu der des Motors 1, so daß die Drehzahl der Hydraulikpumpen 8, 9, welche über eine Kardanwelle 6a mit dem Nebenabtrieb 7 verbunden sind, ebenfalls zu der des Motors proportional ist. Am Schaltgetriebe 2 ist noch ein weiterer Nebenabtrieb 10, dessen Drehzahl proportional zu der Fahrgeschwindigkeit des Trägerfahrzeuges ist, vorgesehen; dieser weitere Nebenabtrieb 10 kann ebenfalls eine oder mehrere - nicht dargestellte - Hydraulikpumpen der Hydraulikanlage antreiben.

Die Hydraulikanlage des Trägerfahrzeuges umfaßt ferner eine hydraulische Steuerung, welche in Fig. 1 exemplarisch durch ein Umschaltventil 11 dargestellt ist. Ein elektronisches Steuergerät 12 wirkt über Steuerleitungen 13 auf die regelbaren Hydraulikpumpen 8, 9 sowie auf das Umschaltventil 11. Über das elektronische Steuergerät 12 lassen sich sämtliche Grunddaten der Hydraulikanlage, wie z.B. bestimmte Druck- und Durchflußverhältnisse, einstellen.

Das an das Trägerfahrzeug angeschlossene schematisch dargestellte Anbaugerät 14 besitzt zwei Hydraulikmotoren 15, 16 als Antriebsaggregate für verschiedene Funktionen des Anbaugerätes. Dabei sind die Hydraulikmotoren 15, 16 über Hydraulikleitungen 17 mit der Hydraulikanlage des Trägerfahrzeuges verbunden. Die Antriebsverbindung 18a, 18b, mittels welcher das Anbaugerät 14 an dem Trägerfahrzeug angekoppelt wird, umfaßt an seinem fahrzeugseitigen Teil 18a fünf Schalter 19, von welchen zwei durch entsprechende Schaltnocken 20 betätigt werden, welche an dem geräteseitigen Teil 18b der Antriebsverbindung vorgesehen sind. Die fünf Schalter 19 sind über Leitungen 21 mit dem elektronischen Steuergerät 12 verbunden, welche die durch die Betätigung der entsprechenden Schalter 19 gebildete Information auf das elektronische Steuergerät 12 übertragen. In dem vorliegenden Ausführungsbeispiel entspricht die dargestellte Konfiguration der betätigten Schalter 19 einem bestimmten Code, durch welchen aus dem elektronischen Steuergerät 12 eine spezifische, auf das Anbaugerät 14 abgestimmte fest einprogrammierte Grundeinstellung der Hydraulikanlage abgerufen wird.

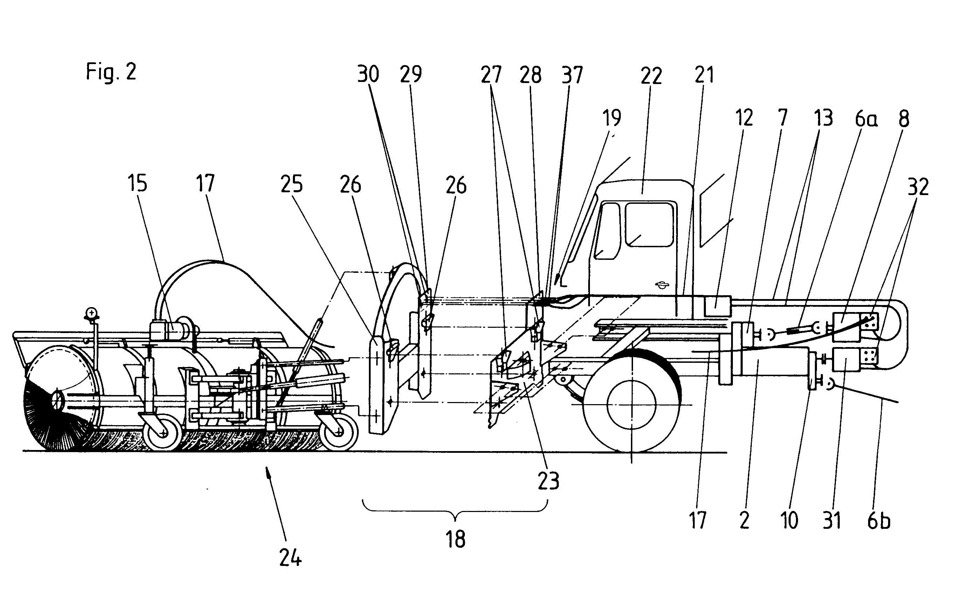

Fig. 2 zeigt eine bauliche Ausführungsform der Antriebsverbindung zur Verwendung in Verbindung mit einer Vorbaukehrmaschine 24 als Arbeitsgerät. Die Antriebsverbindung 18 umfaßt eine an dem Trägerfahrzeug 22 frontseitig befestigte Platte 23, welche zur Aufnahme eines an der Vorbaukehrmaschine 24 befestigten Rahmens 25 vorgesehen ist. Der Rahmen besitzt dabei zwei Klauen 26, welche in entsprechende Führungen 27 an der fahrzeugseitigen Platte 23 eingreifen und dadurch den Rahmen 25 bezüglich der Platte positionieren. Auf diese Weise ist sichergestellt, daß sich die an einer Schalterplatte 28 angeordneten Schalter 19 und entsprechende zur Betätigung der Schalter vorgesehene Flächen einer an dem Rahmen 25 angeordneten Metall platte 29 exakt gegenüberstehen. Die Schalter 19 sind dabei als optische Sensoren 37 ausgebildet, deren über die Leitungen 21 an das elektronische Steuergerät 12 abgegebenen Signale davon abhängen, ob der ihnen gegenüberliegende Bereich der Metallplatte 29 Durchbrechungen 30 aufweist oder nicht.

In Abweichung von dem in Fig. 1 dargestellten Ausführungsbeispiel ist gemäß Fig. 2 neben der Hydraulikpumpe 8, welche mit zur Motordrehzahl proportionaler Drehzahl angetrieben wird, eine weitere Hydraulikpumpe 31 vorhanden, welche über den Nebenabtrieb 10 mit einer zur Fahrgeschwindigkeit des Trägerfahrzeuges proportionalen Drehzahl angetrieben wird. Die an beiden Hydraulikpumpen jeweils vorgesehene hydraulische Steuerung 32 regelt dabei in Abhängigkeit von den von dem elektronischen Steuergerät 12 abgegebenen und über Steuerleitungen 13 übertragenen Befehlen die Durchflußrichtung, den Druck etc. in den Hydraulikleitungen 17, welche einen an der Vorbaukehrmaschine vorgesehenen Hydraulikmotor 15 speisen, der als Antrieb der Kehrwalze dient.

Im übrigen entsprechen die dargestellten Teile und Aggregate denjenigen gemäß Fig. 1, so daß auf die entsprechenden oben stehenden Ausführungen verwiesen wird.

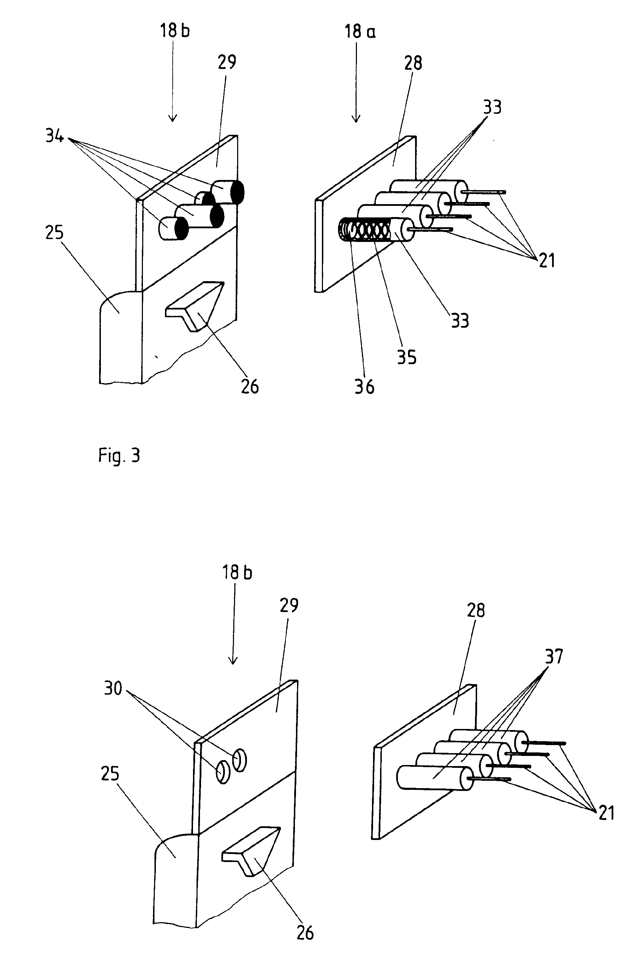

Fig. 3 zeigt eine Abwandlung der Antriebsverbindung gemäß Fig. 2 in der Weise, daß von vier Schaltelementen analoge Signale abgegeben werden, welche gegebenenfalls direkt auf die hydraulische Steuerung der Hydraulikanlage wirken können. Am gewählten Beispiel werden die Schaltelemente auf dem fahrzeugseitigen Teil 18a der Antriebsverbindung aus Zylindern 33 und auf dem geräteseitigen Teil 18b der Antriebsverbindung aus Kolben 34 gebildet, welche im angekoppelten Zustand in die Zylinder 33 eindringen. Die Zylinder 33 sind mit Steuerflüssigkeit gefüllt und an ihrer den Kolben 34 zugewandten Stirnseite durch einen axial verschieblichen, unter der Vorspannung einer Druckfeder 35 stehenden Dichtkolben 36 hermetisch abgeschlossen. Je nach ihrer axialen Erstreckung verdrängen die Kolben 34 beim Eindringen in die Zylinder 33 durch Verschieben der Dichtkolben 36 unterschiedliche Mengen Steuerflüssigkeit in die Druckleitungen 21, wodurch ein analoges Signal für die Weiterverarbeitung in dem elektronischen Steuergerät und/oder direkt in der hydraulischen Steuerung zur Verfügung steht. Andere analoge Schaltelemente wie z.B. kapazitive Schalter können selbstverständlich in gleicher Weise Verwendung finden.

Fig. 4 zeigt in vergrößerter Darstellung eine Anordnung von digitalen Schaltern, wie sie in der Antriebsverbindung gemäß Fig. 2 Verwendung findet. Auf der Schalterplatte 28, welche an dem fahrzeugseitigen Teil der Antriebsverbindung angeordnet ist, sind vier optische Sensoren 37 nebeneinander angeordnet. Sofern dies unter den gegebenen Verhältnissen günstiger ist, ist eine beliebige andere Anordnung wie beispielsweise übereinander, auf den Eckpunkten eines Quadrates etc. in gleicher Weise wählbar. Die am Rahmen 25 des geräteseitigen Teils 18b der Antriebsverbindung angeordnete Metallplatte 29 besitzt zwei Durchbrechungen 30, welche dem ersten und dem zweiten optischen Sensor gegenüberliegen. Dadurch erfolgt beim Ankoppeln des Anbaugerätes ein Betätigen lediglich des dritten und des vierten Sensors, so daß die von den Leitungen 21 an das elektronische Steuergerät abgegebene Information dem Digitalcode 0011 entspricht.

## Patentansprüche

1. Antriebsverbindung an einem Trägerfahrzeug für wechselbare hydraulisch angetriebene Anbaugeräte, mit einer oder mehreren fahrzeugseitig vorgesehenen Hydraulikpumpen, deren hydraulische Steuerung mittels eines elektronischen Steuergeräts einstellbar ist, welches entsprechend den Grunddaten für den hydraulischen Antrieb eines oder mehrerer Anbaugeräte programmierbar ist,
dadurch gekennzeichnet,
daß beim Anbau oder Wechsel eines Anbaugeräts am Fahrzeug die Programmierung automatisch durch Betätigung von auf das elektronische Steuergerät und/oder auf die hydraulische Steuerung wirkenden Schalten erfolgt, derart, daß bestimmte, einander räumlich zugeordnete geräteseitige und fahrzeugseitige Schaltelemente miteinander in Wirkungsverbindung treten.

2. Antriebsverbindung nach Anspruch 1,
dadurch gekennzeichnet,
daß eine fahrzeugseitige Platte (23), mit der fahrzeugseitige Schaltelemente (19; 37; 33) fest verbunden sind, und ein geräteseitiger, mit der Platte (23) koppelbarer Rahmen (25), mit dem geräteseitige Schaltelemente (20; 30; 34) fest verbunden sind, vorgesehen sind, wobei die fahrzeugseitigen Schaltelemente (19; 37; 33) über Leitungen (21) mit dem elektronischen Steuergerät (12) verbunden sind.

3. Antriebsverbindung nach Anspruch 1,
dadurch gekennzeichnet,
daß Schaltelemente zur Programmierung zumindest der folgenden Grunddaten je Anbaugerät vorgesehen sind:
a) Auswahl hinsichtlich Anzahl und/oder Typ der zu aktivierenden Hydraulikpumpen
b) Einstellung von Volumenstrom bzw. Pumpenanstellwinkel der angewählten Hydraulikpumpen
c) Einstellung von Höchst- und/oder Mindestdruck des Hydrauliksystems
d) Einstellung von maximalem Volumenstrom bei maximalem Druck im Hydrauliksystem

4. Antriebsverbindung nach Anspruch 3, als Nebenabtriebsverbindung mit dem Antriebsmotor des Trägerfahrzeugs,
dadurch gekennzeichnet,
daß die Nebenabtriebsverbindung, entweder als motor- oder als nockenwellenabhängiger Nebenabtrieb, durch Betätigung von Schaltelementen wählbar einstellbar ist.

5. Antriebsverbindung nach Anspruch 1 oder Anspruch 2,
dadurch gekennzeichnet,
daß die Programmierung durch einen digitalen Code ausgelöst wird, der von digital arbeitenden Schaltelementen auf das elektronische Steuergerät geschaltet wird.

6. Antriebsverbindung nach Anspruch 1,
dadurch gekennzeichnet,
daß als Schaltelemente (19, 20) mechanische Schalter wie Nocken- oder Rollenschalter vorgesehen sind.

7. Antriebsverbindung nach Anspruch 1,
dadurch gekennzeichnet,
daß die Schaltelemente (19, 20) berührungslose Schalter (37) umfassen.

8. Antriebsverbindung nach Anspruch 7,
dadurch gekennzeichnet,
daß die berührungslosen Schalter (37) an einer fahrzeugseitigen Schalterplatte (28) nach einer vorgegebenen Funktionsmatrix angeordnet sind, denen geräteseitig eine sich der Schalterplatte (28) beim Ankoppeln annähernde Metallplatte (29) zugeordnet ist, welche am Ort jedes nicht zu betätigenden Schalters (37) Durchbrechungen (30) aufweist.

9. Antriebsverbindung nach Anspruch 8,
dadurch gekennzeichnet,
daß als berührungslose Schalter optische Sensoren verwendet werden.

10. Antriebsverbindung nach Anspruch 1,
dadurch gekennzeichnet,
daß durch Betätigung der Schalter elektrische Verbindungen hergestellt werden.

## Claims

1. Driving connection on a carrier vehicle for changeable, hydraulically driven mounted implements, with one or more hydraulic pumps provided on the vehicle, whereof the hydraulic control can be adjusted by means of an electronic control unit, which can be programmed in accordance with the basic data for the hydraulic drive of one or more mounted implements, characterised in that when mounting or changing a mounted implement on the vehicle, the programming takes place automatically by actuating switches acting on the electronic control unit and/or on the hydraulic control so that certain switching members located on the implement and on the vehicle and associated spatially with each other come into operative connection.

2. Driving connection according to Claim 1, characterised in that a plate (23) on the vehicle side, to which switching members (19; 37; 33) on the vehicle side are securely connected, and a frame (25) on the implement side, which is able to be connected to the plate (23), to which frame switching members (20; 30; 34) on the implement side are securely connected, are provided, the switching members (19; 37; 33) on the vehicle side being connected by way of leads (21) to the electronic control unit (12).

3. Driving connection according to Claim 1, characterised in that switching members for programming at least the following basic data are provided per mounted implement:
a) selection as regards the number and/or type of hydraulic pumps to be activated
b) adjustment of the volumetric flow or pump angle of pitch of the selected hydraulic pumps
c) adjustment of the maximum and/or minimum pressure of the hydraulic system
d) adjustment of maximum volumetric flow in the case of maximum pressure in the hydraulic system.

4. Driving connection according to Claim 3, as an auxiliary output connection to the drive motor of the carrier vehicle, characterised in that the auxiliary output connection, either as an auxiliary output dependent on the engine or dependent on the cam shaft, can be adjusted optionally by actuating switching members.

5. Driving connection according to Claim 1 or Claim 2, characterised in that the programming is initiated by a digital code, which is sent by digitally operating switching members to the electronic control unit.

6. Driving connection according to Claim 1, characterised in that mechanical switches such as cam or roller switches are provided as the switching members (19, 20).

7. Driving connection according to Claim 1, characterised in that the switching members (19, 20) comprise non-contacting switches (37).

8. Driving connection according to Claim 7, characterised in that the non-contacting switches (37) are located on a switch plate (28) on the vehicle according to a predetermined function matrix, associated with which, on the implement side, is a metal plate (29) which approaches the switch plate (28) at the time of connection, which metal plate comprises openings (30) at the location of each switch (37) not to be actuated.

9. Driving connection according to Claim 8, characterised in that optical sensors are used as non-contacting switches.

10. Driving connection according to Claim 1, characterised in that electrical connections are made by actuating the switches.

## Revendications

1. Liaison d'entraînement pour véhicule porteur d'outils interchangeables commandés hydrauliquement, avec une ou plusieurs pompes hydrauliques prévues sur le véhicule dont la commande hydraulique peut être réglée à l'aide d'un appareil de commande électronique pouvant être programmé selon les données de base pour l'entraînement hydraulique d'un ou de plusieurs outils, caractérisée en ce que, lors de l'installation ou du remplacement d'un outil sur le véhicule, la programmation se fait automatiquement en actionnant des commutateurs qui agissent sur l'appareil de commande électronique et / ou sur la commande hydraulique de telle manière, que certains éléments de commutation de l'outil et du véhicule associés dans l'espace sont reliés pour agir ensemble.

2. Liaison d'entraînement selon la revendication 1, caractérisée en ce que sont prévus, sur le véhicule, une plaque (23) à laquelle sont reliés fixement des éléments de commutation (19, 37, 33) du véhicule, et, sur l'outil, un cadre (25) pouvant être couplé avec la plaque (23) et auquel sont reliés fixement des éléments de commutation (20, 30, 34) de l'outil, les éléments de commutation (19, 37, 33) du véhicule étant reliés à l'appareil de commande électronique (12) par l'intermédiaire de circuits (21).

3. Liaison d'entraînement selon la revendication 1, caractérisée en ce que des éléments de commutation sont prévus pour programmer au moins les données de base suivantes pour chaque outil porté:
a) Sélection du nombre et / ou du type de pompes hydrauliques à activer;
b) Réglage du débit ou de l'angle d'incidence des pompes hydrauliques sélectionnées ;
c) Réglage de la pression maximale et / ou minimale du système hydraulique;
d) Réglage du débit maximal en cas de pression maximale dans le système hydraulique.

4. Liaison d'entraînement selon la revendication 3, formant liaison d'entraînement secondaire avec le moteur de commande du véhicule porteur, caractérisée en ce que la liaison d'entraînement secondaire, ayant la forme d'un entraînement secondaire dépendant du moteur ou de l'arbre à cames, peut être réglée sélectivement en actionnant des éléments de commutation.

5. Liaison d'entraînement selon la revendication 1 ou 2, caractérisée en ce que la programmation est déclenchée par un code numérique qui est communiqué à l'appareil de commande électronique par des éléments de commutation fonctionnant en mode numérique.

6. Liaison d'entraînement selon la revendication 1, caractérisée en ce que les éléments de commutation (19, 20) prévus sont des commutateurs mécaniques tels que des combinateurs à cames ou des interrupteurs à galets.

7. Liaison d'entraînement selon la revendication 1, caractérisée en ce que les éléments de commutation (19, 10) comportent des commutateurs (37) sans contact.

8. Liaison d'entraînement selon la revendication 7, caractérisée en ce que les commutateurs (37) sans contact sont disposés sur une plaque de commutateur (28) du véhicule selon un schéma logique donné, commutateurs auxquels est associée une plaque de métal (29) montée sur l'outil, qui se rapproche de la plaque de commutateur (28) lors du couplage et qui présente des découpures (30) à l'emplacement de chaque commutateur (37) ne devant pas être actionné.

9. Liaison d'entraînement selon la revendication 8, caractérisée en ce que les commutateurs sans contact utilisés sont des détecteurs optiques.

10. Liaison d'entraînement selon la revendication 1, caractérisée en ce que des connexions électriques sont réalisées lors de l'actionnement des commutateurs.
